# EUROPEAN PATENT APPLICATION

(11) **EP 4 451 684 A1**
(43) Date of publication of application: **23.10.2024**
(21) Application number: 21967636.8
(22) Date of filing: 15.12.2021
(51) Int. Cl.: H04N 21/242, H04N 7/54

(54) **DATA PROCESSING METHOD AND SYSTEM, STORAGE MEDIUM, AND TERMINAL DEVICE**

(71) Applicant: Shenzhen TCL New Technology Co., Ltd, Shenzhen, Guangdong 518052 (CN)
(72) Inventor: ZHANG, Jinliang, Shenzhen, Guangdong 518052 (CN)
(74) Representative: Murgitroyd & Company
(86) International application number: PCT/CN2021/138478
(87) International publication number: WO 2023/108500

(57) **Abstract**

A data processing method, comprising: receiving a data transport stream transmitted by a transmitting end, and parsing the current program clock reference comprised in the data transport stream; obtaining the current system time information of a system; according to the current program clock reference, the current system time information, and a function relationship between a historical program clock reference and historical system time information, determining whether the current program clock reference fluctuates; if yes, adjusting the current program clock reference to obtain an adjusted program clock reference; and processing the data transport stream according to the adjusted program clock reference.

## Description

### TECHNICAL FIELD

The present application relates to the field of information processing technology, and more particularly, to a data processing method and system, storage medium and terminal device.

### BACKGROUND ART

In a Digital Video Broadcasting (DVB) system, a transmitted video data is mostly transport stream (TS). In the TS transport stream, Program Clock Reference (PCR) plays a vital role in a transmission rate of the TS transport stream (hereinafter referred to as TS stream) and the correct decoding of a terminal decoder.

In the specific implementation, a transmitting end of the TS stream may use a public system clock to create some time stamps and carry the PCR in the TS stream for transmission. The receiving end of the TS stream needs to decode the TS stream in combination with the PCR, which is the public system clock of the encoder in the transmitting end and the time stamp created by it, and a correct use of time and timestamp regenerated by the decoder in the receiving end provides a measure to properly synchronize the operation of the decoder. However, in the prior art, the video data decoded by the receiving end may be out of sync during the display process, such as picture, sound freezes or black screen and silence.

### SUMMARY OF INVENTION

### Technical problem

The embodiments of the present application provide a data processing method and system, storage medium and terminal device, which realize adjustment of a fluctuating program clock reference in a data transport stream.

### Problem solutions

### Technical solutions

In an aspect, an embodiment of the present application provides a data processing method, comprising:
receiving a data transport stream transmitted by a transmitting end and parsing a current program clock reference comprised in the data transport stream;
obtaining a current system time information of a system;
according to the current program clock reference, the current system time information, and a function relationship between a historical program clock reference and a historical system time information, determining whether the current program clock reference fluctuates;
if yes, adjusting the current program clock reference to obtain an adjusted program clock reference; and
processing the data transport stream according to an adjusted program clock reference.

In another aspect, an embodiment of the present application provides a data stream processing system, comprising:
a parser configured to receive a data transport stream transmitted by a transmitting end and configured to parse a current program clock reference comprised in the data transport stream;
a time obtainer configured to obtain a current system time information of a system;
a fluctuation determiner configured to according to the current program clock reference, the current system time information, and a function relationship between a historical program clock reference and a historical system time information, determine whether the current program clock reference fluctuates;
an adjuster configured to adjust the current program clock reference if the current program clock reference fluctuates and obtain an adjusted program clock reference; and
a data processor configured to process the data transport stream according to an adjusted program clock reference.

In another aspect, an embodiment of the present application further provides a computer-readable storage medium, storing multiple computer programs, wherein the computer programs are loaded by a processor to perform the data processing method according to an embodiment of the present application in an aspect.

In another aspect, an embodiment of the present application further provides a terminal device, comprising a processor and a memory;
wherein the memory is configured to store multiple computer programs, the computer programs are loaded by a processor to perform the data processing method according to an embodiment of the present application in an aspect; wherein the processor is configured to implement each of the multiple computer programs.

### Beneficial effects of invention

### Beneficial effects

In the method of this embodiment, after receiving the data transport stream, the receiving end obtains the current program clock reference and the current system time information, and combines the function relationship between the historical program clock reference and the historical system time information to determine that when the current program clock reference fluctuates, the current program clock reference is adjusted, and then the data transport stream is processed according to the adjusted program clock reference. In this way, in the process of processing the data transport stream by the receiving end, an abnormal fluctuation of the program clock reference carried by the transmitting end when transmitting the data transport stream is taken into account, and by adjusting the abnormal program clock reference, a situation of video picture asynchrony caused by abnormal fluctuation of the program clock reference is avoided, such as picture and sound freeze or black screen and silence, thereby improving a user experience.

### Brief description of drawings

### DESCRIPTION OF DRAWINGS

In order to more clearly illustrate the embodiments of the present application or related art, the following figures that will be described in the embodiments are briefly introduced. It is obvious that the drawings are merely some embodiments of the present application, those skilled in the art can obtain other figures according to these figures without paying the premise.
FIG. 1 is a schematic diagram of a data transport stream transmitted by a transmitting end in an embodiment of the present application.
FIG. 2 is a schematic diagram of a data processing method provided in an embodiment of the present application.
FIG. 3 is a flowchart of a data processing method provided in an embodiment of the present application.
FIG. 4 is a schematic diagram of a function relationship between a historical program clock reference and historical system time information in an embodiment of the present application.
FIG. 5 is a schematic diagram of a logical structure of a receiving end in an application embodiment of the present application.
FIG. 6 is a flowchart of a data processing method in an application embodiment of the present application.
FIG. 7 is a schematic diagram of a function relationship between a program clock reference and system time information in an application embodiment of the present application.
FIG. 8 is a schematic diagram of a distributed system to which a data processing method is applied in another application embodiment of the present application.
FIG. 9 is a schematic diagram of a block structure in another application embodiment of the present application.
FIG. 10 is a schematic diagram of a logical structure of a data processing system provided in an embodiment of the present application.
FIG. 11 is a schematic diagram of a logical structure of a terminal device provided in an embodiment of the present application.

### Embodiments of invention

### DETAILED DESCRIPTION OF EMBODIMENTS

The following will be combined with the drawings in the embodiments of the present application to clearly and completely describe the technical solutions in the embodiments of the present application. Obviously, the described embodiments are only part of the embodiments of the present application, not all of the embodiments. Based on the embodiments in the present application, all other embodiments obtained by those skilled in the art without creative work are within the scope of protection of this application.

The technical solutions in the embodiments of the present application will be described clearly and completely below in conjunction with the drawings in the embodiments of the present application. Obviously, the described embodiments are only part of the embodiments of the present application, not all of the embodiments. Based on the embodiments in the present application, all other embodiments obtained by ordinary technicians in this field without creative work are within the scope of protection of this application.

The terms "first", "second", "third", "fourth", etc. (if any) in the specification and claims of this application and the above-mentioned drawings are used to distinguish similar objects, and are not necessarily used to describe a specific order or sequence. It should be understood that the data used in this way can be interchanged where appropriate, so that the embodiments of the present application described herein can be implemented in an order other than those illustrated or described herein. In addition, the terms "including" and "having" and any variations thereof are intended to cover non-exclusive inclusions. For example, a process, method, system, product or device that includes a series of steps or units is not necessarily limited to those steps or units explicitly listed. Instead, other steps or units that are not explicitly listed or inherent to these processes, methods, products or devices may be included.

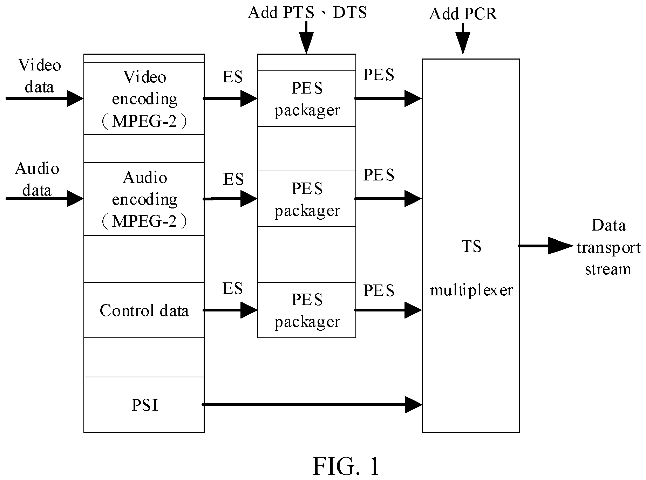

An embodiment of the present application provides a data processing method, which is mainly applied to a digital television broadcasting system, when a transmitting end sends a data transport stream, a receiving end processes the data transport stream. Specifically, as shown in FIG1, the transmitting end transmits the data transport stream in the following manner:

The transmitting end first samples, quantizes and compresses analog data according to certain standards, such as Moving Picture Experts Group-2 (MPEG-2) standard, to form corresponding basic streams (ES), including basic streams of audio data, video data and some control data, as well as program specific information (PSI). Then the basic streams are divided into segments, and the corresponding header files are added to form corresponding packaged basic streams (PES). The presentation time stamp (PTS) and decoding time stamp (DTS) are added to header information of PES. During transmission, the PES packet and PSI are combined in the multiplexer to form a data transport stream TS, in which a program clock reference (PCR) is added to the header information of TS.

PCR is used to indicate a clock value of a local system of the transmitting end, which is a sample of a counter state triggered by a local system clock pulse of the transmitting end. PTS is used to indicate display time of audio and video data, and DTS is used to indicate decoding time of audio and video data. PTS and DTS are created based on a common system clock.

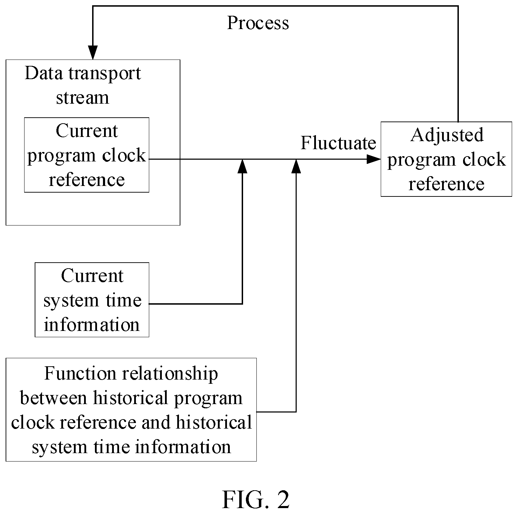

Thus, as shown in FIG. 2, the receiving end can process the data transport stream through the following steps:
Receiving a data transport stream transmitted by a transmitting end and parsing a current program clock reference comprised in the data transport stream; obtaining a current system time information of a system; according to the current program clock reference, the current system time information, and a function relationship between a historical program clock reference and a historical system time information, determining whether the current program clock reference fluctuates; if yes, adjusting the current program clock reference to obtain an adjusted program clock reference; and processing the data transport stream according to an adjusted program clock reference.

In this way, when the receiving end processes the data transport stream, the abnormal fluctuation of the program clock reference carried by the transmitting end when transmitting the data transport stream is taken into consideration, and by adjusting the abnormal program clock reference, the video picture asynchronism caused by the abnormal fluctuation of the program clock reference is avoided, such as picture and sound freeze or black screen and silence, thereby improving the user experience.

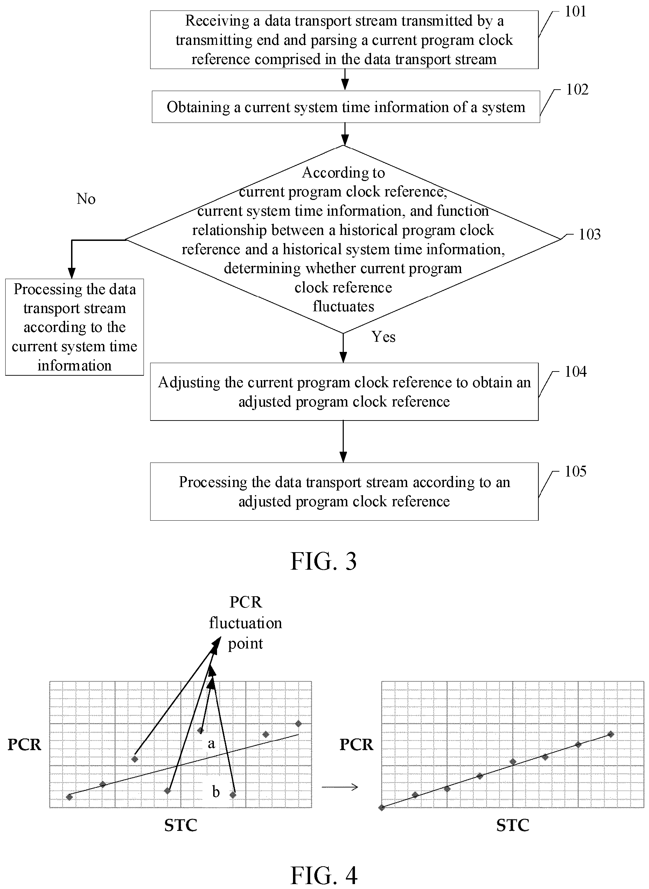

An embodiment of the present application provides a data processing method, which is mainly a method executed by a receiving end, and the flowchart is shown in FIG. 3, including:
Step 101, Receiving a data transport stream transmitted by a transmitting end and parsing a current program clock reference comprised in the data transport stream.
Step 102, Obtaining a current system time information of a system.

It can be understood that in a digital video broadcasting system, when the transmitting end sends the data transport stream in the manner of FIG. 1 above, the data transport stream may include audio data, video data, some control data information and program specific information (PSI), etc. When the data transport stream reaches the decoder at the receiving end, the decoder may obtain the current program clock reference carried in the data transport stream. Based on the program clock reference, the current system time information (System Time Clock, STC) of the local system is restored as the reference for the synchronization control of audio data and video data, and based on the PTS and DTS carried in the data transport stream, the audio and video data are synchronized with the STC respectively to achieve synchronization between audio data and video data.

When obtaining the current system time information, it is necessary to obtain it based on the program clock reference. Specifically, when the receiving end parses the first program clock reference, the program clock reference is directly loaded into the STC counter. After that, whenever a new program clock reference is parsed, the difference e between the new program clock reference and the current STC is passed through pulse width modulation, and then input into a low-pass filter and amplified, and a throttling signal f is output to throttle the frequency of the oscillator (VCO). The frequency output by the VCO is a signal oscillating at around 27MHz, which is used as the current system clock. 27MHz clock passes through a waveform and is input into the STC counter to obtain a current STC value, that is, the current system time information.

Step 103, According to the current program clock reference, the current system time information, and a function relationship between a historical program clock reference and a historical system time information, determining whether the current program clock reference fluctuates. If fluctuation occurs, step 104 is executed; if no fluctuation occurs, the data transport stream is processed according to the current system time information obtained in the above step 102. Specifically, according to the PTS and DTS carried in the data transport stream, the audio and video data in the data transport stream are synchronized with the current system time information calculated in the above step 102, so as to achieve synchronization between the audio data and the video data.

Specifically, the function relationship between the historical program clock reference and the historical system time information can be obtained by fitting multiple groups of historical observation values obtained before the currently initiated data processing process, and stored in the local system. Each group of historical observation values includes a historical program clock reference and corresponding historical system time information. When the data processing process of this embodiment is initiated, the receiving end can directly extract it from the local system.

Fitting means that given a number of discrete function values {f1, f2, ..., fn} representing a function based on specific parameters, the difference between the function and the known point set is minimized by adjusting several unknown coefficients f (λ1, A 2, ..., λn) in the function.

If the relationship between the current program clock reference and the current system time information satisfies the function relationship, or the distance between the coordinate points represented by the current program clock reference and the current system time information and the curve represented by the function relationship is within a preset range, it means that the current program clock reference has not fluctuated, otherwise the current program clock reference has fluctuated.

Step 104, Adjusting the current program clock reference to obtain an adjusted program clock reference.

Specifically, the current program clock reference may be adjusted to the curve represented by the above function relationship, so that the relationship between the current program clock reference and the current system time information satisfies the above function relationship.

For example, FIG. 4 shows a schematic diagram of a curve representing the function relationship between the historical program clock reference and the historical system time information. Each point in the figure represents the coordinate point represented by the program clock reference obtained by parsing when the receiving end receives the data transport stream once and the system time information obtained based on the data transport stream received this time.

Assume that the function relationship between the historical program clock reference y and the historical system time information x is: y=ax+b. When the relationship between the current program clock reference and the current system time information obtained after receiving the data transport stream does not satisfy the function relationship, the current program clock reference fluctuates. The coordinate points represented by the current program clock reference and the current system time information are the fluctuation points of the program clock reference, which need to be adjusted to the curve represented by the above function relationship.

Step 105, Processing the data transport stream according to an adjusted program clock reference.

Specifically, the current system time information can be recalculated based on the adjusted program clock reference. Then, based on the PTS and DTS carried in the data transport stream, the audio and video data in the data transport stream are synchronized with the recalculated current system time information to achieve synchronization between audio data and video data.

It should be noted that after the receiving end obtains the current program clock reference, it can first determine whether the current program clock reference is valid. If it is valid, it may continue to determine whether the current program clock reference fluctuates. If it is invalid, it is necessary to wait for the program clock reference in the next received data transport stream. Specifically, if the current system time exceeds the current program clock reference, the current program clock reference is invalid.

The receiving end can also parse PTS and DTS contained in the data transport stream and determine whether the PTS and DTS are valid. If valid, continue to synchronize the PTS and DTS. If invalid, it is necessary to wait for the PTS and DTS in the next received data transport stream. Specifically, if the PTS and DTS exceed the current system time, the PTS and DTS are invalid.

The receiving end further determines whether the current system time information obtained is valid. If valid, it continues to determine whether the current program clock reference fluctuates based on the current system time information. If invalid, it is necessary to wait for the system time information to be obtained based on the next received data transport stream. Specifically, if the current system time information obtained is smaller than the system time information obtained last time, the current system time information is invalid.

It should also be noted that if the current program clock reference is determined to fluctuate through the above step 103, it means that the current program clock reference in the data transport stream is abnormal. Further, in this embodiment, the fluctuation type of the current program clock reference can also be determined. The fluctuation type may include but is not limited to the following types: forward jump, reverse jump, wraparound and extreme value, etc. Correspondingly, for different fluctuation types, the adjustment principle of the current program clock reference is the same. That is, the current program clock reference is adjusted so that the relationship between the current program clock reference and the current system time information satisfies the above functional relationship, specifically:

Positive jump refers to a program clock reference predicted based on the current system time information and the above function relationship. Compared with the current program clock reference, the current program clock reference exceeds the predicted program clock reference, and the difference between the current program clock reference and the predicted program clock reference is greater than a threshold. For example, point a in FIG. 4 corresponds to the current program clock reference. In this case, it is necessary to reduce the current program clock reference so that the current program clock reference is consistent with the predicted program clock reference.

Reverse jump refers to a program clock reference predicted based on the current system time information and the above functional relationship. Compared with the current program clock reference, the current program clock reference is less than the predicted program clock reference, and the difference between the predicted program clock reference and the current program clock reference is greater than a threshold. For example, point b in FIG. 4 corresponds to the current program clock reference. In this case, it is necessary to increase the value of the current program clock reference so that the current program clock reference is consistent with the predicted program clock reference.

Wraparound means that the curve represented by the multiple program clock references obtained within a period of time and their corresponding system time information is not the curve represented by the above function relationship, but may be parallel or nearly parallel to the curve represented by the above function relationship. In this case, each program clock reference obtained within this period of time can be adjusted to the curve represented by the above function relationship.

The extreme value refers to the fact that after the receiving end obtains the current program clock reference, it may be stored in a memory of the receiving end. The values stored in the memory of the receiving end may be limited to a certain range. When the current program clock reference obtained by the receiving end exceeds the range limited by the value stored in the memory of the receiving end, such as greater than the maximum value or less than the minimum value, the current program clock reference is the extreme value point. The current program clock reference may not be stored in the memory of the receiving end, resulting in a missing value. In this case, the current program clock reference can be directly set to a point on the curve represented by the above function relationship.

It can be seen that in the method of this embodiment, after the receiving end receives the data transport stream, it obtains the current program clock reference and the current system time information, and combines the function relationship between the historical program clock reference and the historical system time information to determine that when the current program clock reference fluctuates, the current program clock reference is adjusted, and then the data transport stream is processed according to the adjusted program clock reference. In this way, in the process of processing the data transport stream by the receiving end, the abnormal fluctuation of the program clock reference carried by the transmitting end when transmitting the data transport stream is taken into account, and by adjusting the abnormal program clock reference, the video picture synchronization caused by the abnormal fluctuation of the program clock reference is avoided, such as picture and sound freeze or black screen and silence, thereby improving the user experience.

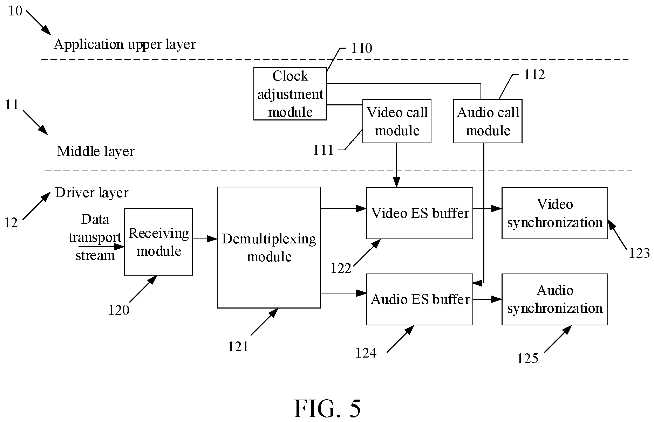

The following is a specific application example to illustrate the data processing method of the embodiment of the present application. In the embodiment, the receiving end is specifically a digital television, and its structure can be shown in FIG. 5. It can be understood that FIG. 5 only shows the modules related to the data processing of the present application. The digital television also includes other modules, which are not described here, specifically including: an application upper layer 10, a middle layer 11, and a driver layer 12.

The application upper layer 10 is configured to initiate application requests and may include an interface for digital television to interact with users. Application requests, such as channel switching requests and channel search requests, may be initiated through this interface. In the method of this embodiment, application requests initiated by the application upper layer are not involved.

The middle layer 11 is configured to connect the information transmission between the upper application layer 10 and the driver layer 12. It can also process the request initiated by the upper application layer 10, and control and manage the operations performed by the driver layer 12. In this embodiment, the middle layer 11 may include a clock adjustment module 110, a video call module 111, and an audio call module 112. The clock adjustment module 110 is configured to adjust the abnormally fluctuating program clock reference in the data transport stream using the method of this embodiment. The video call module 111 is configured to transmit the adjusted program clock reference to a video ES buffer 122, and control a video synchronization 123 to perform synchronization processing. The audio call module 112 is configured to transmit the adjusted program clock reference to an audio ES buffer 124, and control an audio synchronization 125 to perform synchronization processing.

The driver layer 12 is configured to receive the transmitted data transport stream and process the transmission signal accordingly. Specifically, the driver layer 12 in this embodiment may include a receiving module 120, a demultiplexing module 121, a video ES buffer 122, a video synchronization 123, an audio ES buffer 124, and an audio synchronization 125. The receiving module 120 is configured to receive the data transport stream. The demultiplexing module 121 is used to demultiplex the data transport stream, transmit the obtained video data to the video ES buffer 122, and transmit the obtained audio data to the audio ES buffer 124. The video synchronization 123 is configured to restore the system time information of the local system according to the program clock reference, and synchronize the PTS and DTS in the video data with the restored system time information. The audio synchronization 125 is configured to restore the system time information of the local system according to the program clock reference, and synchronize the PTS and DTS in the audio data with the restored system time information.

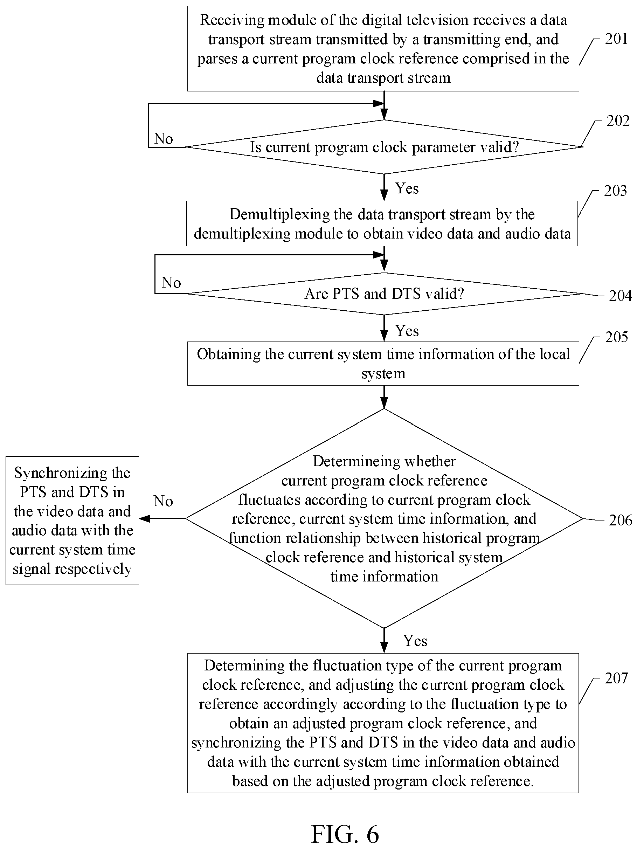

Specifically, as shown in FIG. 6, the data processing method in the middle layer 11 of the digital television may include the following steps:
Step 201, Receiving module 120 of the digital television receives a data transport stream transmitted by a transmitting end, and parses a current program clock reference comprised in the data transport stream.
Step 202, Adjustment module 110 in the middle layer 11 determines whether the current program clock reference is valid. If it is valid, continue to execute the following step 203; if it is invalid, continue to wait for the next data transport stream to be received, and return to execute step 202 for the program clock reference in the next received data transport stream.
Step 203: Demultiplexing the data transport stream by the demultiplexing module 121 to obtain video data and audio data.
Step 204, Adjustment module 110 determines whether the PTS and DTS in the audio data and video data obtained by the demultiplexing are valid. If valid, continue to execute the following step 205. If invalid, continue to wait for the next data transport stream to be received, and return to execute step 204 for the PTS and DTS in the next received data transport stream.
Step 205, Adjustment module 110 obtains the current system time information of the local system, that is, the current STC.

Furthermore, the adjustment module 110 can also determine whether the current system time information is valid. If it is valid, the following step 206 will be continued. If it is invalid, the next data transport stream may be received and the system time information obtained based on the next received data transport stream may be determined to be valid.

Step 206, Adjustment module 110 determines whether the current program clock reference fluctuates according to the current program clock reference, the current system time information, and the function relationship between the historical program clock reference and the historical system time information. If fluctuation occurs, continue to execute the following step 207. If no fluctuation occurs, the video call module 111 and the audio call module 112 can be used to control the video synchronization 123 and the audio synchronization 125 respectively, so as to synchronize the PTS and DTS in the video data and the audio data with the current system time information obtained above.

Step 207, Adjustment module 110 determines the fluctuation type of the current program clock reference, and adjusts the current program clock reference accordingly according to the fluctuation type to obtain the adjusted program clock reference, and controls the video synchronization 123 and the audio synchronization 125 respectively through the video call module 111 and the audio call module 112, so as to synchronize the PTS and DTS in the video data and the audio data with the current system time information obtained based on the adjusted program clock reference.

It can be seen that through the method in this embodiment, the PCR that fluctuates in the data transport stream can be adjusted in real time and dynamically through the middle layer 11, so as to reduce the number of times the hardware in the driver layer 12 continuously adjusts the PTS due to PCR fluctuations, reduce the load of the hardware system, and optimize the operating efficiency of the overall system. Further, it also reduces the problems of freeze, black screen and silence, and asynchrony of audio and video during the playback of the data transport stream, which can better optimize the user experience in practical applications.

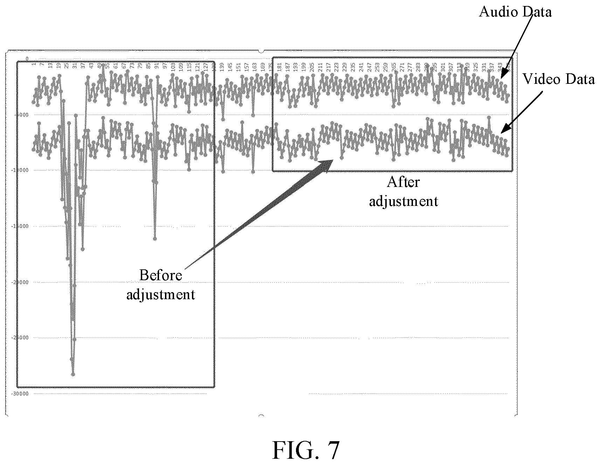

For example, FIG. 7 shows a relationship diagram between the program clock reference and the system time information in the process of processing video data and audio data by video synchronization 123 and audio synchronization 125 respectively. It can be seen that by adjusting the program clock reference in this embodiment, the stability of the program clock reference and the system time information can be achieved, thereby reducing the need for the hardware in the driver layer 12 to adjust the system time information for the fluctuating program clock reference.

The following is another specific application example to illustrate the data processing method in this application. The data processing system in the embodiment of this application is mainly a distributed system 100. The distributed system may include a client 300 and multiple nodes 200 (any form of computing device in the access network, such as a server, a user terminal). The client 300 and the node 200 are connected in the form of network communication.

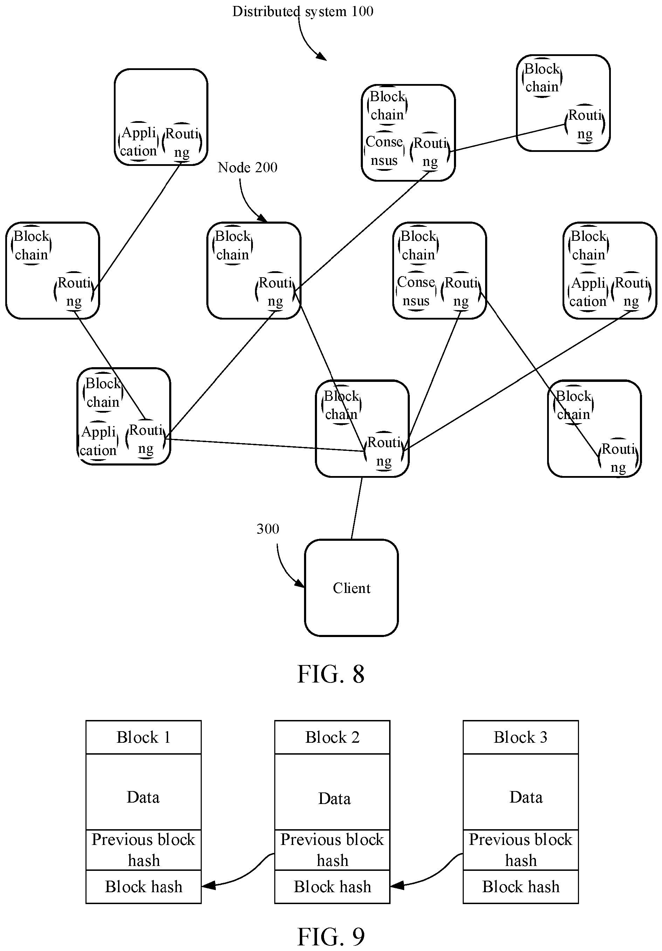

Taking the distributed system as a blockchain system as an example, see FIG. 8 for an optional structural diagram of the distributed system 100 provided in the embodiment of the present application applied to the blockchain system. It is formed by multiple nodes 200 (any form of computing devices in the access network, such as servers, user terminals) and a client 300. A peer-to-peer (P2P) network is formed between nodes. The P2P protocol is an application layer protocol running on the Transmission Control Protocol (TCP) protocol. In a distributed system, any machine such as a server or a terminal can join and become a node. The node may include a hardware layer, a middle layer, an operating system layer, and an application layer.

Referring to the functions of each node in the blockchain system shown in FIG. 8, the functions involved include:
1) Routing, a basic function of a node, is used to support communication between nodes.
   In addition to the routing function, a node can also have the following functions:
2) Application, used for deployment in blockchain. Implement specific business according to actual business needs. Record the data related to the implementation function to form record data. Carry digital signature in the record data to indicate the source of task data. Send the record data to other nodes in the blockchain system, so that other nodes can add the record data to the temporary block when they successfully verify the source and integrity of the record data.

For example, the business implemented by the application includes the code to implement the data processing function, which mainly includes:

Receiving a data transport stream transmitted by a transmitting end and parsing a current program clock reference comprised in the data transport stream; obtaining a current system time information of a system; according to the current program clock reference, the current system time information, and a function relationship between a historical program clock reference and a historical system time information, determining whether the current program clock reference fluctuates; if yes, adjusting the current program clock reference to obtain an adjusted program clock reference; and processing the data transport stream according to an adjusted program clock reference.

3) Blockchain, including a series of blocks that are connected to each other in the order of their generation. Once a new block is added to the blockchain, it will not be removed. The block records the record data submitted by the nodes in the blockchain system.

Refer to FIG. 9 for an optional schematic diagram of the block structure provided in the embodiment of the present application. Each block includes the hash value of the transaction record stored in the block (the hash value of the block) and the hash value of the previous block, and each block is connected by the hash value to form a blockchain. In addition, the block may also include information such as the timestamp when the block is generated. Blockchain is essentially a decentralized database, which is a string of data blocks generated by cryptographic methods. Each data block contains relevant information for verifying the validity of its information (anti-counterfeiting) and generating the next block.

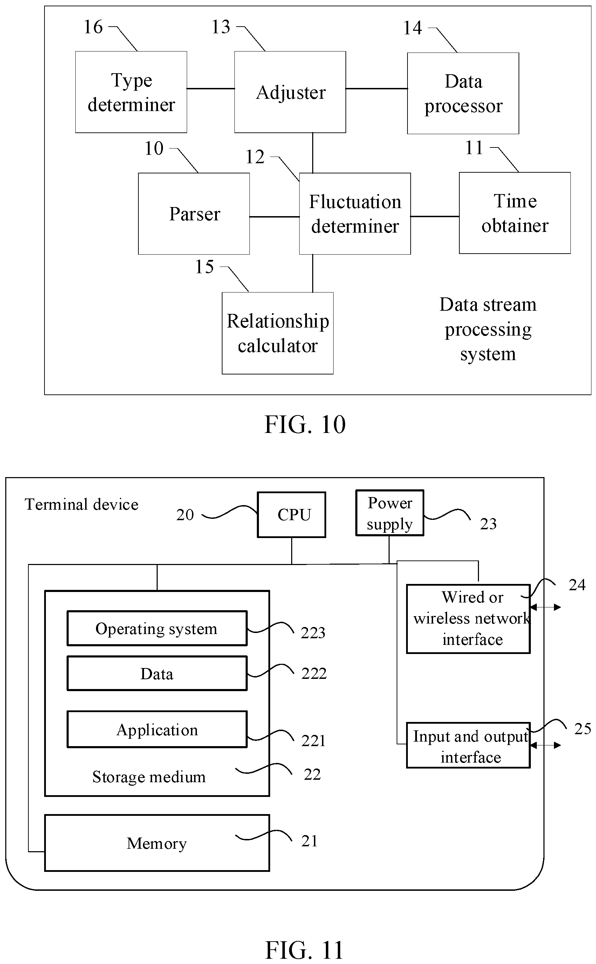

The embodiment of the present application further provides a data processing system, such as the above-mentioned receiving end, whose structural schematic diagram is shown in FIG. 10, and specifically may include the followings.

A parser 10 is configured to receive a data transport stream transmitted by a transmitting end and configured to parse a current program clock reference comprised in the data transport stream.

A time obtainer 11 is configured to obtain a current system time information of a system.

A fluctuation determiner 12 is configured to according to the current program clock reference obtained by the parser 10, the current system time information obtained by the time obtainer 11, and a function relationship between a historical program clock reference and a historical system time information, determine whether the current program clock reference fluctuates.

The fluctuation determiner 12 is further configured to, if a relationship between the current program clock reference and the current system time information satisfies the function relationship or if a distance between a coordinate point represented by the current program clock reference and the current system time information and a curve represented by the function relationship is within a preset range, the current program clock reference has not fluctuated.

An adjuster 13 is configured to adjust the current program clock reference if the current program clock reference fluctuates and obtain an adjusted program clock reference.

A data processor 14 is configured to process the data transport stream according to an adjusted program clock reference.

Furthermore, the data processing system of this embodiment also includes the followings.

A relationship calculator 15 is configured to obtain multiple groups of historical observation values, wherein each group of historical observation values comprises a historical program clock reference and corresponding historical system time information; wherein the relationship calculator 15 is configured to perform a fitting operation on the multiple groups of historical observation values to obtain the function relationship. The fluctuation determiner 12 may determine that the current program clock reference has not fluctuated according to the functional relationship obtained by the relationship calculator 15.

A type determiner 16 is configured to determine the type of fluctuation of the current program clock reference. Then the above-mentioned adjuster 13 is specifically used to adjust the current program clock reference according to the fluctuation type determined by the type determiner 16. The fluctuation type includes any of the following types: forward jump, reverse jump, wraparound and extreme value. In this way, when the adjuster 13 adjusts the current program clock reference according to the fluctuation type, it is specifically used to adjust the current program clock reference to the curve represented by the functional relationship.

It can be seen that in the method of this embodiment, after the receiving end receives the data transport stream, it obtains the current program clock reference and the current system time information, and combines the function relationship between the historical program clock reference and the historical system time information to determine that when the current program clock reference fluctuates, the current program clock reference is adjusted, and then the data transport stream is processed according to the adjusted program clock reference. In this way, in the process of processing the data transport stream by the receiving end, the abnormal fluctuation of the program clock reference carried by the transmitting end when transmitting the data transport stream is taken into account, and by adjusting the abnormal program clock reference, the video picture synchronization caused by the abnormal fluctuation of the program clock reference is avoided, such as picture and sound freeze or black screen and silence, thereby improving the user experience.

The embodiment of the present application also provides a terminal device, the schematic diagram of which is shown in FIG. 11. The terminal device may have relatively large differences due to different configurations or performances, and may include one or more central processing units (CPU) 20 (for example, one or more processors) and memory 21, and one or more storage media 22 (for example, one or more mass storage devices) storing application programs 221 or data 222. The memory 21 and the storage medium 22 may be temporary storage or permanent storage. The program stored in the storage medium 22 may include one or more modules (not shown in the figure). Each module may include a series of instruction operations in the terminal device. Furthermore, the central processing unit 20 may be configured to communicate with the storage medium 22 to execute a series of instruction operations in the storage medium 22 on the terminal device.

Specifically, the application 221 stored in the storage medium 22 includes a data processing application. The program may include the parser 10, the time obtainer 11, the fluctuation determiner 12, the adjuster 13, the data processor 14, the relationship calculator 15, and type determiner 16 in the above-mentioned data processing system, which will not be described in detail here. Furthermore, the central processing unit 20 can be configured to communicate with the storage medium 22 and execute a series of operations corresponding to the data processing application stored in the storage medium 22 on the terminal device.

The terminal device may also include one or more power supplies 23, one or more wired or wireless network interfaces 24, one or more input and output interfaces 25, and/or one or more operating systems 223, such as Windows ServerTM, Mac OS XTM, UnixTM, LinuxTM, FreeBSDTM, etc.

The steps performed by the receiving end in the above method embodiment may be based on the structure of the terminal device shown in FIG. 11.

In another aspect, an embodiment of the present application further provides a computer-readable storage medium, storing multiple computer programs, wherein the computer programs are loaded by a processor to perform the data processing method executed by the above-mentioned receiving end.

In another aspect, an embodiment of the present application further provides a terminal device, comprising a processor and a memory.

The memory is configured to store multiple computer programs, the computer programs are loaded by a processor to perform the data processing method executed by the above-mentioned receiving end; wherein the processor is configured to implement each of the multiple computer programs.

According to one aspect of the present application, a computer program product or computer program is provided. The computer program product or computer program includes computer instructions. The computer instructions are stored in a computer-readable storage medium. The processor of a computer device reads the computer instructions from the computer-readable storage medium. The processor executes the computer instructions so that the computer device executes the data processing method provided in the above-mentioned various optional implementations.

A person skilled in the art can understand that all or part of the steps in the various methods of the above embodiments can be completed by instructing the relevant hardware through a program. The program can be stored in a computer-readable storage medium. The storage medium can include: a read-only memory (ROM), a random access memory (RAM), a disk or an optical disk, etc.

The above is a detailed introduction to a data processing method, system, storage medium and terminal device provided in the embodiment of the present application. This article uses specific examples to illustrate the principles and implementation methods of the present application. The description of the above embodiments is only used to help understand the method and core ideas of the present application. Further, for technicians in this field, according to the ideas of the present application, there will be changes in the specific implementation methods and application scope. In summary, the content of this specification should not be understood as a limitation on the present application.

## Claims

1. A data processing method, **characterized by** comprising:
receiving a data transport stream transmitted by a transmitting end and parsing a current program clock reference comprised in the data transport stream;
obtaining a current system time information of a system;
according to the current program clock reference, the current system time information, and a function relationship between a historical program clock reference and a historical system time information, determining whether the current program clock reference fluctuates;
if yes, adjusting the current program clock reference to obtain an adjusted program clock reference; and
processing the data transport stream according to an adjusted program clock reference.

2. The method of claim 1, wherein according to the current program clock reference, the current system time information, and the function relationship between the historical program clock reference and the historical system time information, determining whether the current program clock reference fluctuates comprises:
if a relationship between the current program clock reference and the current system time information satisfies the function relationship or if a distance between a coordinate point represented by the current program clock reference and the current system time information and a curve represented by the function relationship is within a preset range, the current program clock reference has not fluctuated.

3. The method of claim 2, further comprising:
obtaining multiple groups of historical observation values, wherein each group of historical observation values comprises a historical program clock reference and corresponding historical system time information;
performing a fitting operation on the multiple groups of historical observation values to obtain the function relationship.

4. The method of any one of claims 1 to 3, wherein before adjusting the current program clock reference, the method further comprises:
determining a fluctuation type of the current program clock reference;
wherein adjusting the current program clock reference further comprises adjusting the current program clock reference according to the fluctuation type.

5. The method of claim 4, wherein the fluctuation type comprises any of following types: a positive jump, a negative jump, a wraparound, and an extreme value.

6. The method of claim 4, wherein adjusting the current program clock reference according to the fluctuation type further comprises:
adjusting the current program clock reference to the curve represented by the function relationship.

7. A data stream processing system, **characterized by** comprising:
a parser configured to receive a data transport stream transmitted by a transmitting end and configured to parse a current program clock reference comprised in the data transport stream;
a time obtainer configured to obtain a current system time information of a system;
a fluctuation determiner configured to according to the current program clock reference, the current system time information, and a function relationship between a historical program clock reference and a historical system time information, determine whether the current program clock reference fluctuates;
an adjuster configured to adjust the current program clock reference if the current program clock reference fluctuates and obtain an adjusted program clock reference; and
a data processor configured to process the data transport stream according to an adjusted program clock reference.

8. The system of claim 7, wherein the fluctuation determiner is further configured to, if a relationship between the current program clock reference and the current system time information satisfies the function relationship or if a distance between a coordinate point represented by the current program clock reference and the current system time information and a curve represented by the function relationship is within a preset range, the current program clock reference has not fluctuated.

9. The system of claim 8, further comprising:
a relationship calculator configured to obtain multiple groups of historical observation values, wherein each group of historical observation values comprises a historical program clock reference and corresponding historical system time information; wherein the relationship calculator is configured to perform a fitting operation on the multiple groups of historical observation values to obtain the function relationship.

10. A computer-readable storage medium, storing multiple computer programs, wherein the computer programs are loaded by a processor to perform the data processing method according to any one of claims 1 to 6.

11. A terminal device, comprising a processor and a memory; wherein the memory is configured to store multiple computer programs, the computer programs are loaded by a processor to perform the data processing method according to any one of claims 1 to 6; wherein the processor is configured to implement each of the multiple computer programs.
